(19) Europäisches Patentamt / European Patent Office / Office européen des brevets

(11) **EP 3 035 747 B1**

(12) **EUROPEAN PATENT SPECIFICATION**

(45) Date of publication and mention
of the grant of the patent:
**15.05.2019 Bulletin 2019/20**

(51) Int Cl.:
***H04W 52/02*** *(2009.01)*    *H04B 7/04* *(2017.01)*

(21) Application number: **15305253.5**

(22) Date of filing: **19.02.2015**

(54) **MOBILITY OPTIMIZATION IN MILLIMETER WAVE OVERLAY NETWORKS**

MOBILITÄTSOPTIMIERUNG IN MILLIMETERWELLENÜBERLAGERUNGSNETZEN

OPTIMISATION DE LA MOBILITÉ DANS DES RÉSEAUX DÉDIÉS À ONDES MILLIMÉTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2014 EP 14307108**

(43) Date of publication of application:
**22.06.2016 Bulletin 2016/25**

(73) Proprietor: **Alcatel Lucent**
**91620 Nozay (FR)**

(72) Inventors:
• **Aziz, Danish**
**70435 Stuttgart (DE)**

• **Aydin, Oman**
**70435 Stuttgart (DE)**
• **Bakker, Hajo-Erich**
**70435 Stuttgart (DE)**
• **Baracca, Paola**
**70435 Stuttgart (DE)**

(74) Representative: **Mooij, Maarten et al**
**Alcatel-Lucent**
**Intellectual Property Business Group**
**Lorentzstraße 10**
**70435 Stuttgart (DE)**

(56) References cited:
**US-A1- 2012 099 448    US-A1- 2013 286 960
US-A1- 2014 148 107    US-A1- 2014 235 287
US-A1- 2014 335 857**

**Description**

FIELD OF THE INVENTION

The present invention relates to a method and apparatus for establishing a millimeter wave connection in overlay networks.

BACKGROUND OF THE INVENTION

This section introduces aspects that may be helpful in facilitating a better understanding of the invention. Accordingly, the statements of this section are to be read in this light and are not to be understood as admission about what is in the prior art.

Increasing bandwidth demand and increasing number of users in wireless networks need wireless technologies with high data rates. To satisfy these demands, overlay networks are proposed in which Millimeter Wave Access Points providing high data rates to users are overlaid on legacy networks, e.g. macro cell, micro cell or pico cell networks according to 3GPP standard or the like. Public places like bus stops, train-platforms, shops, airports, etc. will be equipped with Millimeter Wave Access Points. It is assumed that in such places, User Equipments requesting high data rates are static or have low mobility. Such User Equipments are connected to a legacy network and need to connect to a Millimeter Wave Access Point when demanding high data rates. Due to the propagation characteristics of millimeter waves, the coverage area of Millimeter Wave Access Points is much smaller than the coverage area of micro cell or pico cell legacy networks.

The frequency range of millimeter wave networks is in the range of 30-300 GHz. Legacy networks operate on legacy frequencies below 5 GHz. According to the Friis equation, the received power at distance R in free space is

$$P_R = P_T G_T G_R \left( \frac{\lambda}{4\pi R} \right)^2,$$

where $P_R$ is the received power and $P_T$ is the transmitted power, $G_T$ and $G_R$ represent the transmit and receive antenna gains, respectively and $\lambda$ represents the wavelength. Thus, path loss, which increases with higher frequencies, can be compensated by the use of directive antennas with high antenna gains. Due to the shorter wavelengths in millimeter wave communication systems, very high order phased antenna arrays are possible with very low spatial dimensions. With the help of antenna arrays and beamforming techniques, highly directional beams are formed to increase the coverage range and compensate the path loss. This increases the signal to noise ratio and mitigates energy waste.

With high order phased antenna arrays, beams with different spatial properties are employed. Very narrow beams with high gains are used to increase the signal to noise ratio or to increase coverage at constant signal to noise ratio. Broad beams with less gain are used to increase robustness against mobility.

In legacy networks, a Common Reference Signal (CRS) (pilots or training symbols) is used for cell specific Reference Signal Received Power (RSRP) measurements by the User Equipment. The Common Reference Signal is broadcasted by each cell without beamforming. The existing solutions for cell detection and new link establishment are based on intra- and inter-frequency User Equipment measurements. The serving cell configures the User Equipment and provides measurement periods to carry on these measurements. The User Equipment reports these measurements and the network decides for the new link establishment.

This procedure cannot be easily adapted for Millimeter Wave Access Point detection and new link establishment of User Equipments to Millimeter Wave Access Points, as the range and the coverage area of the Millimeter Wave Access Point is very small. Further, the detection of the cell and the new link establishment will be delayed. This causes problems if the User Equipment requiring millimeter wave connection is not static or moving at very low speed.

To address similar problems, a beamforming protocol has been incorporated in the WiGig standard developed for millimeter wave indoor communications. This protocol is based on beam identification, beam refinement and beam tracking. In a first phase, the Millimeter Wave Access Point sends training symbols by using a set of broad beams. The broad beams extend the range of the Millimeter Wave Access Point, although they do not provide the maximum beamforming gain. Once the User Equipment is detected, the Millimeter Wave Access Point refines the beam by sending further training symbols with the subset of narrow beams included in the broad beam selected before. This procedure allows increasing the coverage area of the Millimeter Wave Access Point with respect to the method employed in legacy networks where the training symbols are transmitted without beamforming. However, User Equipments located in the coverage range of the Millimeter Wave Access Point when using small beams but not located in the coverage area of the Millimeter Wave Access Point when using broader beams are not detected by this procedure.

US-patent application publication US2012/0099448 describes wireless communication using two communication modes. A wireless apparatus includes a first wireless unit for performing communications within a first communication coverage area and a second wireless unit for performing communications within a second communications coverage area which is smaller than the first communications coverage area. The wireless apparatus further includes a controller which starts the second wireless unit on the basis of a received power of a start notification signal received by the first wireless unit.

US-patent application publication US2014/0235287 relates to transmit power control for wireless communication. A controller may control a plurality of transmit powers of a plurality of directional beams formed by an antenna array to transmit wireless communication. Such control may be based on at least first and second power limits, the first power limit including a power density limit corresponding to a power density of a directional beam of the plurality of directional beams, and the second power limit including a total transmit power limit corresponding to a total of the transmit powers.

US-patent application publication US2013/0286960 relates to control channel beam management in a wireless system with a large number of antennas. A physical downlink control channel (PDCCH) is included in or more transmit (Tx) beams transmitted from a base station to at least one user equipment. A Tx beam is defined by a cell specific reference signal. A Tx beam is further configured to carry a beam identifier and the PDCCH is configured to include resource allocation information for the user equipment.

US-patent application publication US2014/0148107 describes a communication device that communicates in a wireless network using a first and a second frequency band. Inter-band beamforming assistance may be provided by the lower frequency band.

SUMMARY OF THE INVENTION

It is an object of the invention to address the above mentioned problem and extend the range of a Millimeter Wave Access Point in which User Equipments can be detected.

According to one embodiment of the invention, a method for establishing a millimeter wave connection at a Millimeter Wave Access Point for a User Equipment is proposed. The Millimeter Wave Access Point monitors a legacy frequency uplink reference signal originating from the User Equipment. The uplink signal is a signal sent by the User Equipment to the base station for signaling or communication purposes. The Millimeter Wave Access Point maps the legacy frequency uplink reference signal strength to a related signal strength in the millimeter wave access frequency. Using the mapping information, a millimeter wave connection between the Millimeter Wave Access Point and the User Equipment is established. This has the advantage that information from communication in legacy frequency bands is used to detect the location of the User Equipment. The coverage area of the Millimeter Wave Access Point is extended in order to identify further User Equipments to which a connection can be established.

According to one embodiment, the mapped signal strength is checked and it is determined if the User Equipment is in the extended coverage area of the Millimeter Wave Access Point. If the User Equipment is in the extended coverage area of the Millimeter Wave Access Point, beamforming weights to serve the User Equipment on a millimeter wave channel are determined.

These beamforming weights allow defining a narrow beam targeting the User Equipment and extending the coverage area of the Millimeter Wave Access Point.

According to one embodiment, determining beamforming weights to serve the User Equipment on a millimeter wave channel comprises scanning all available narrow maximum gain beams of the Millimeter Wave Access Point. In one embodiment, only a few narrow maximum gain beams of the Millimeter Wave Access Point are checked. The few narrow maximum gain beams are selected according to the direction from which the legacy frequency uplink reference signal is received.

According to one embodiment, the narrow maximum gain beams are selected by evaluating the distances between the User Equipment, the macro cell station and the Millimeter Wave Access Point. As the position of the Millimeter Wave Access Point is known by the macro cell station, as a consequence, also the distance between the macro cell station and the Millimeter Wave Access Point is known. Further, the uplink reference signal strength of the User Equipment at the legacy frequency at the macro cell station indicates the distance between the User Equipment and the macro cell station. Similarly, the uplink reference signal strength of the User Equipment at the legacy frequency at the Millimeter Wave Access Point indicates the distance between the User Equipment and the Millimeter Wave Access Point. By using these three distances, the position of the User Equipment can be triangled and limited to two concrete positions, given that the estimates of the distances between User Equipment, Millimeter Wave Access Point and macro cell station are sufficiently accurate. The narrow maximum gain beams are selected considering the above triangulation of the User Equipment.

According to one embodiment, the step of determining beamforming weights to serve the User Equipment on a millimeter wave channel if the User Equipment is in the extended coverage area of the Millimeter Wave Access Point is only performed for certain User Equipments based at least on the User Equipment service class or User Equipment bearer information.

According to one embodiment, the step of determining beamforming weights to serve the User Equipment on a millimeter wave channel if the User Equipment is in the extended coverage area of the Millimeter Wave Access Point is only performed for certain User Equipments based at least on their speed.

According to one embodiment, a Millimeter Wave Access Point in a wireless communication network is proposed. The Millimeter Wave Access Point is connected to a base station. The Millimeter Wave Access Point performs a method as described above.

Further advantageous features of the embodiments of the invention are defined and are described in the following detailed description.

BRIEF DESCRIPTION OF THE DRAWINGS

Some embodiments of apparatus and methods in accordance with embodiments of the present invention are now described, by way of examples only, and with reference to the accompanying drawings, in which:

Fig. 1 discloses a wireless overlay network

Fig. 2 discloses a radiation pattern of a Millimeter Wave Access Point according to the invention

Fig. 3 discloses a Millimeter Wave Access Point which is included in a macro cell and a corresponding radiation pattern according to the invention

Fig. 4 discloses a flow chart of a method according to the invention

Fig. 5 discloses a first embodiment of a User Equipment detection and new link establishment procedure according to the invention

Fig. 6 discloses a second embodiment of a User Equipment detection and new link establishment procedure according to the invention

Fig. 7 discloses a third embodiment of a User Equipment detection and new link establishment procedure according to the invention

DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

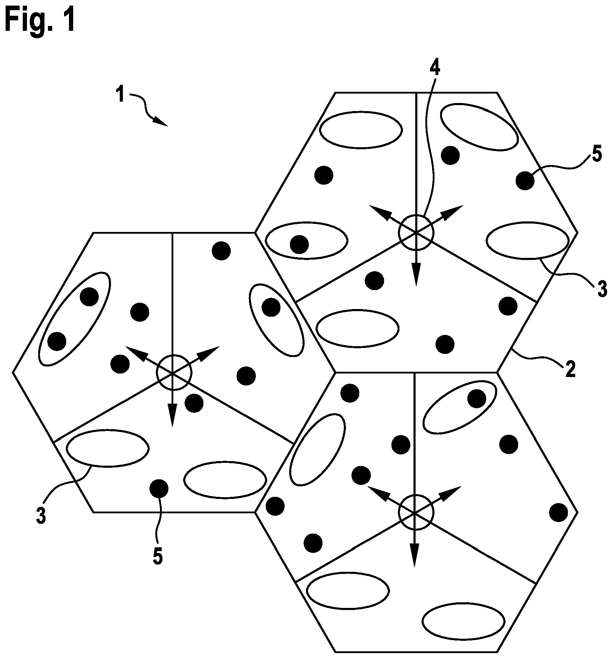

Fig. 1 discloses a cellular overlay network 1. A legacy network including macro cells 2, micro cells and pico cells 3, is disclosed. A macro cell 2 is served by a base station 4. In the serving area of the legacy network, Millimeter Wave Access Points 5 are available, thus the millimeter wave service is overlaid over the legacy network. User Equipments (not separately depicted) are in the serving area of the legacy network. Some User Equipments are in the service area of the legacy infrastructure and at the same time in the serving area of the Millimeter Wave Access Point 5. Some User Equipments are static or low speed mobile User Equipments connected to the legacy network and demanding for very high data rates. The legacy network may not be able to provide such data rates in an efficient manner. For serving such requests, Millimeter Wave Access Points 5 are available.

However, due to the propagation characteristics at millimeter wave frequencies, the coverage area of a Millimeter Wave Access Point 5 is smaller than that of macro cells 2 or pico cells 3. Therefore, according to the invention, a coverage extension of the Millimeter Wave Access Point 5 with a given power budget is proposed as described below. Using the method for coverage extension, detection of Millimeter Wave Access Points 5 by slow moving User Equipments and vice versa and new link establishment of the User Equipment to the Millimeter Wave Access Point 5 is addressed. The legacy network consisting of macro cells 2 and pico cells 3 operates at a legacy frequency fc and the Millimeter Wave Access Point 5 operates at a millimeter wave frequency fm, wherein fc<<fm. A backhaul network is available between the Millimeter Wave Access Point 5 and the legacy network, such that signaling is possible. The legacy network provides necessary information to the Millimeter Wave Access Point 5, e.g. information about active User Equipments in the coverage area of the legacy network, uplink scheduling and pilots.

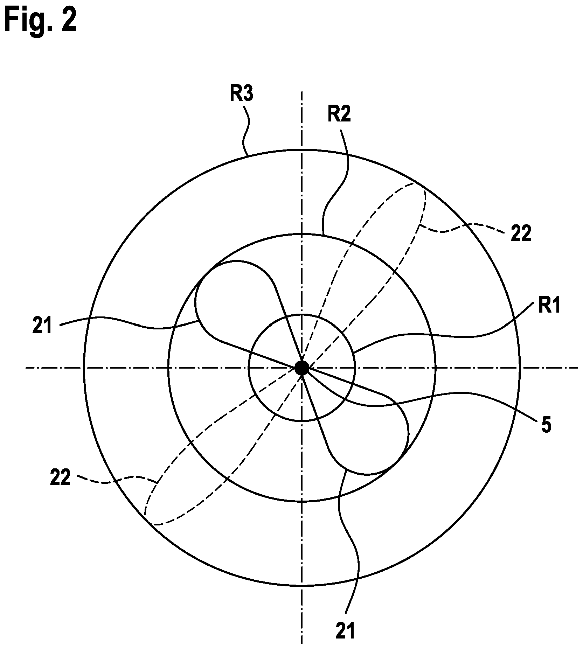

Fig. 2 discloses a radiation pattern of a Millimeter Wave Access Point 5. If the Millimeter Wave Access Point 5 transmits data without beamforming, i.e. transmits omni-directional, a circular radiation pattern exists with the distance R1 around the antenna. If beamforming is employed using broad beams 21, i.e. a medium antenna gain is realized, a distance R2 from the antenna is covered. If small beams 22 are used, i.e. a high antenna gain is realized, a distance R3 around the antenna is covered. In the above mentioned cases for the distances the ratio R1<R2<R3 is valid. Thus, increasing the antenna gain leads to an enhanced distance which is covered. On the other hand, increasing the antenna gain leads to smaller beams. This means that only a certain angle of the surrounding of the antenna is covered. Thus, to address a User Equipment with a certain distance to the Millimeter Wave Access Point 5, accurate beamforming weights need to be determined in order to generate a beam in the correct direction.

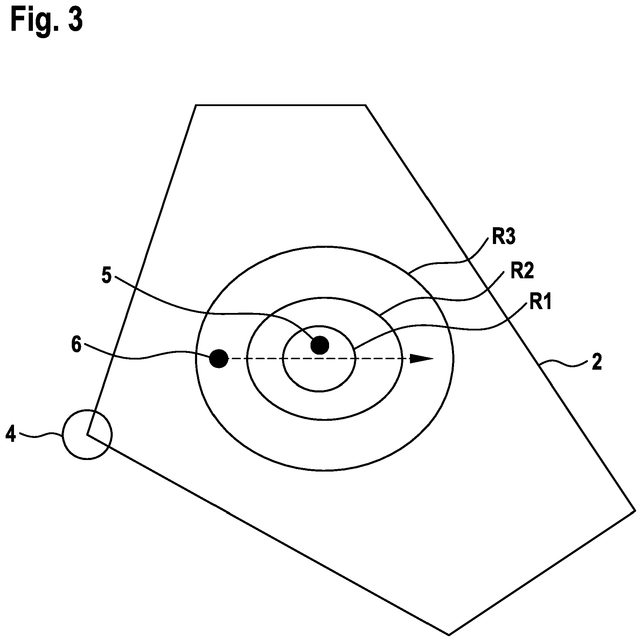

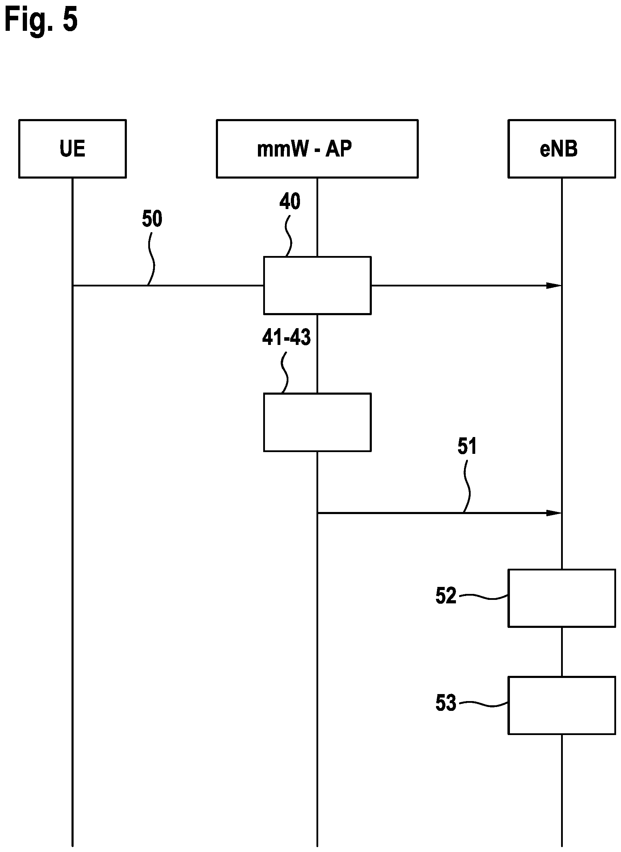

Fig. 3 discloses a macro cell 2 served by a base station 4 including a Millimeter Wave Access Point 5 of a cellular overlay network 1. A User Equipment 6 is disclosed in the macro cell 2 by way of example only. The User Equipment 6 is located at a position where it is served by the macro base station 4. It is not in the coverage area of the Millimeter Wave Access Point 5 when omni-directional transmission is used (area R1) or beamforming with broad beams and small beamforming gains is performed (area R2). The User Equipment 6 is in the coverage area R3 of the Millimeter Wave Access Point 5 when small beams, i.e. high beamforming gains are used. This area is the extended Millimeter Wave Access Point area which can be served according to the below described inventive method. The dotted line arrow in Fig. 3 indicates the movement of the User Equipment 6, which is a low speed movement. New link establishment to the Millimeter Wave Access Point 5 is described further below with regard to Fig. 5-7.

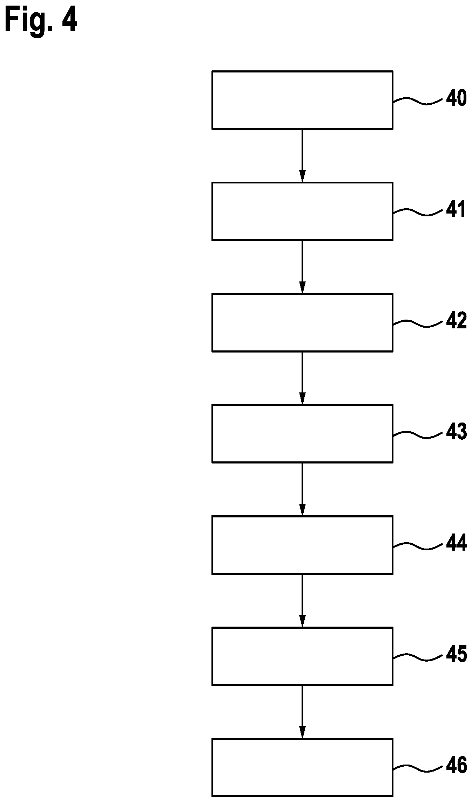

In a scenario according to Fig. 3, the User Equipment 6 is connected to the macro cell 2 and served at a legacy frequency. If the User Equipment 6 requests a high data rate transmission, e.g. for downloading a movie, the procedure for detecting and serving a User Equipment 6 in the extended coverage range of the Millimeter Wave Access Point 5 is started. The Millimeter Wave Access Point 5 is equipped with a legacy frequency receiver and monitors (step 40) the legacy frequency uplink reference signal as depicted in Fig. 4. The legacy frequency uplink reference signal is a signal transmitted by the User Equipment 6 to the base station 4. The legacy frequency uplink reference signal strength is mapped (step 41) to a related signal strength in the millimeter wave access frequency. Using the mapped signal strength, it is determined in step 42 if the User Equipment 6 is in the extended coverage area of the Millimeter Wave Access Point 5. So to say, in steps 41 and 42, the legacy frequency uplink reference signal which is monitored is used to analyze if the User Equipment 6 is in the extended Millimeter Wave Access Point area (area R3). If it is the case that the User Equipment 6 is in the extended Millimeter Wave Access Point area, a decision is made in step 43 that the User Equipment 6 can be served by the Millimeter Wave Access Point 5. In step 44, narrow maximum gain beams of the Millimeter Wave Access Point 5 are scanned in order to determine the beam which can serve the User Equipment 6. In one example, all available narrow beams are checked in order to determine which one is needed to serve the User Equipment 6. In one embodiment, not all narrow beams are checked because preassumptions about the location of the User Equipment 6 are employed. If the User Equipment 6 is found with a corresponding narrow beam, beamforming weights are determined in step 45. A millimeter wave connection is established to the User Equipment 6 using these beamforming weights in step 46.

According to one embodiment, steps 41-43 are implemented as follows. Let x(t,r) represent the uplink reference signal strength measurement of the User Equipment 6 by the Millimeter Wave Access Point 5 at time t. The distance r between the User Equipment 5 and the Millimeter Wave Access Point 5 at the frequency of the legacy network is available from the monitored uplink reference signal. Let $\psi$ be a Boolean parameter mapping the uplink reference signal strength measurement to the range of the Millimeter Wave Access Point 5. $\psi$ is described as $\psi$=<0,1>=<Out of Range, In Range>. Generalizing this operator leads to

$$\psi = f_1(x, \mu)$$

where $\mu$ represents the predetermined uplink reference signal strength measurement threshold which helps in mapping x(t,r) to millimeter wave access. In the above, $\mu$ represents the extended range of the Millimeter Wave Access Point (area R3) when narrow beams are used. In order to determine $\mu$, a starting value based on the Friis equation is used. Then, a refinement by measurements of received signal strengths of User Equipments close to the border of the Millimeter Wave Access Point extended range is made.

In one embodiment, by the below algorithm, the presence of the User Equipment 6 is detected by the Millimeter Wave Access Point 5.

```
----
  Initialize:
```

```
μ ← find μ with pre-measurements
If (x (t, r) > μ)
Then ψ←1
Else ψ←0
End-If
----
```

According to one embodiment, the method as described above is used to detect a moving User Equipment 6 which moves into the Millimeter Wave Access Point extended area R3 with low speed, e.g. less than 3 km/h as an example. This movement is illustrated in Fig. 3 by the dashed line. When moving into this area, the User Equipment 6 is connected to the macro cell 2 on a legacy frequency. New link establishment procedure is already started when the User Equipment 6 is in the Millimeter Wave Access Point extended range R3 and it is not necessary to wait until the User Equipment is in the range R2 of the Millimeter Wave Access Point using broad beams.

According to one embodiment, a direct new link establishment is proposed. Fig. 5 schematically depicts the signaling procedure and steps performed for enabling this new link establishment. As described above, an uplink connection 50 between the User Equipment 6 and the base station 4 is monitored (step 40) by the Millimeter Wave Access Point 5. It is determined if the User Equipment 6 is already in the extended range R3 of the Millimeter Wave Access Point 5 as described above in steps 41 to 43. Fig. 5 illustrates the signaling procedure for the direct new link establishment case. If $\psi$=1, the Millimeter Wave Access Point 5 has detected the presence of the User Equipment 6 and requests from the macro base station 4 (step 51) a new link establishment. Then the macro base station 4 analyses (step 52) the request and starts the new link establishment procedure (step 53). The method as described above is advantageous as it is direct and fast.

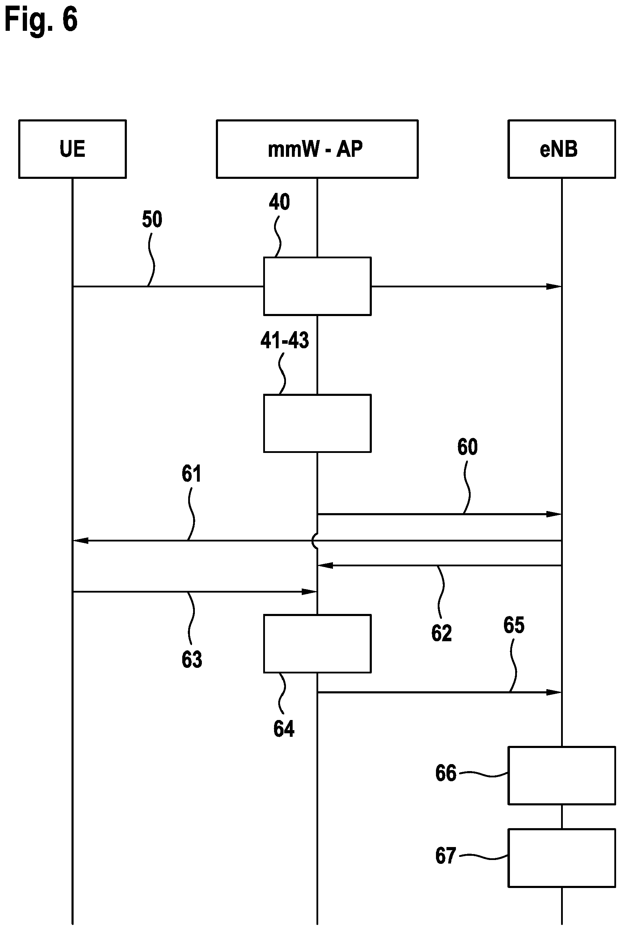

According to one embodiment, the new link establishment is based on uplink millimeter wave measurements. In order to provide a robust new link establishment procedure, an additional monitoring step is included, which is described according to Fig. 6. As described above, an uplink connection 50 between the User Equipment 6 and the base station 4 is monitored 40 by the Millimeter Wave Access Point 5. It is determined if the User Equipment 6 is already in the extended range R3 of the Millimeter Wave Access Point 5 as described above in steps 41 to 43. If $\psi$=1, the Millimeter Wave Access Point 5 has detected the presence of User Equipment 6 and reports 60 the presence of a User Equipment 6 to the macro base station 4.

The macro base station 4 requests 61 from the User Equipment to send reference signals at millimeter wave frequencies. At the same time, the macro cell station requests 62 from the Millimeter Wave Access Point 5 to measure the millimeter wave uplink. When the User Equipment 6 sends 63 the requested reference signals, the Millimeter Wave Access Point 5 measures the high frequency signal strength from the User Equipment 6 in step 64. The Millimeter Wave Access Point 5 then reports 65 the measurement results to the macro base station 4. The macro base station 4 analyzes the measurement results in step 66 and decides if the new link establishment should be performed. If the new link establishment should be performed, the new link establishment procedure is started in step 67.

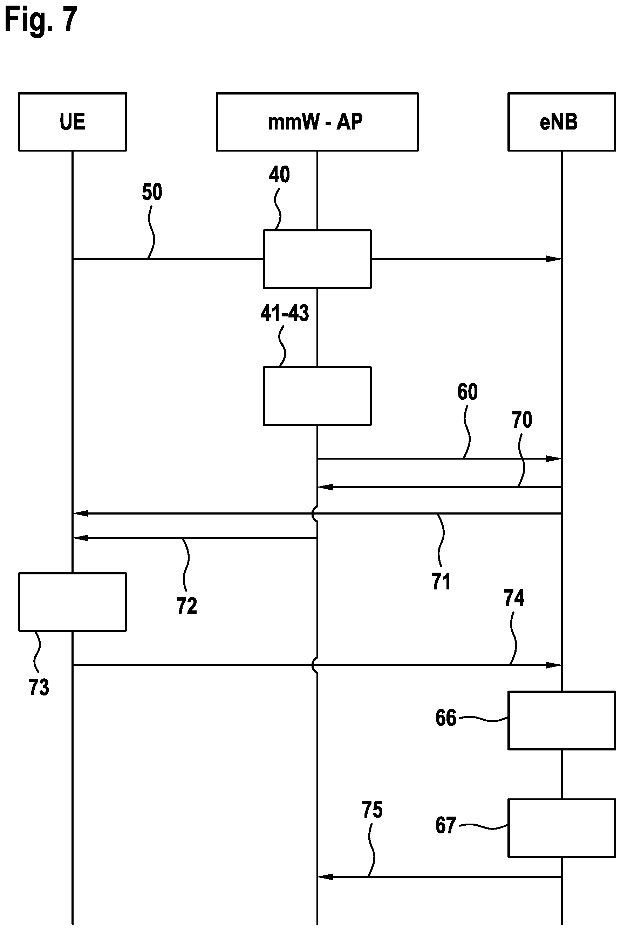

According to one embodiment, the new link establishment is based on downlink millimeter wave measurements in order to avoid periodic measurement gaps for inter-frequency measurements as described with reference to Fig. 7. As described above, an uplink connection 50 between the User Equipment 6 and the base station 4 is monitored 40 by the Millimeter Wave Access Point 5. It is determined if the User Equipment 6 is already in the extended range R3 of the Millimeter Wave Access Point 5 as described above in steps 41 to 43. If $\psi$=1, the Millimeter Wave Access Point 5 has detected the presence of the User Equipment 6 and reports 60 the presence of the User Equipment 6 to the macro base station 4. The macro base station 4 then triggers 70 the Millimeter Wave Access Point 5 to send millimeter wave training signals and instructs 71 the User Equipment 6 to perform inter-frequency measurements for millimeter wave access. The Millimeter Wave Access Point 5 sends 72 millimeter wave training signals with specific beamforming to the User Equipment 6. The User Equipment 6 performs the measurements in step 73 and reports (step 74) these measurements to the macro base station 4. The macro base station 4 analyzes the measurement results in step 66 and decides if the new link establishment should be performed. If the new link establishment should be performed, the new link establishment procedure is started in step 67. The measurement reports, which have been generated in the User Equipment 6 and have been received by the macro base station 4, are relayed (step 75) by the macro base station 4 to the Millimeter Wave Access Point 5. This information can be used by the Millimeter Wave Access Point 5, e.g. for the new link establishment procedure.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method for establishing a millimeter wave connection between a Millimeter Wave Access Point (5) and a User Equipment(6) in a wireless communication network, the network further comprising a base station (4) serving the User Equipment, the method, at the Millimeter Wave Access Point, comprising:

   - monitoring a legacy frequency uplink signal between the User Equipment and the base station, wherein the legacy frequency is below 5 GHz;
   - mapping a strength of the legacy frequency uplink signal to a related signal strength in a millimeter wave access frequency; and
   - establishing a millimeter wave connection with the User Equipment based on the mapping.

2. The method according to claim 1, the Millimeter Wave Access Point being configured to have a coverage area without use of beamforming and an extended coverage area if beamforming is used, the method further comprising:

   - checking the mapped signal strength and determining if the User Equipment is in the extended coverage area of the Millimeter Wave Access Point; and
   - if the User Equipment is in the extended coverage area of the Millimeter Wave Access Point, determining beamforming weights to serve the User Equipment on a millimeter wave channel.

3. The method according to claim 1 or 2, wherein the step of determining beamforming weights to serve the User Equipment on a millimeter wave channel comprises scanning at least some of the available narrow maximum gain beams of the Millimeter Wave Access Point.

4. The method according to claim 2 or 3, wherein the step of determining beamforming weights to serve the User Equipment on a millimeter wave channel if the User Equipment is in the extended coverage area of the Millimeter Wave Access Point is only performed for certain User Equipments based at least on the User Equipment service class or User Equipment bearer information.

5. The method according to one of claims 2 to 4, wherein the step of determining beamforming weights to serve the User Equipment on a millimeter wave channel if the User Equipment is in the extended coverage area of the Millimeter Wave Access Point is only performed for certain User Equipments based at least on their speed.

6. A Millimeter Wave Access Point adapted to perform a method according to any one of claims 1 to 5.

**Patentansprüche**

1. Verfahren zur Herstellung einer Millimeterwellen-Verbindung zwischen einem Millimeterwellen-Zugriffspunkt (5) und einer Benutzerausrüstung (6) in einem drahtlosen Kommunikationsnetz, wobei das Netz ferner eine Basisstation (4) umfasst, welche die Benutzerausrüstung bedient, wobei das Verfahren, an dem Millimeterwellen-Zugriffspunkt, umfasst:

   - Überwachen eines Legacy-Frequenz-Uplink-Signals zwischen der Benutzerausrüstung und der Basisstation, wobei die Legacy-Frequenz unter 5 GHz liegt;
   - Mappen einer Stärke des Legacy-Frequenz-Uplink-Signals auf eine verwandte Signalstärke in einer Millimeterwellen-Zugriffsfrequenz; und
   - Herstellen einer Millimeterwellen-Verbindung mit der Benutzerausrüstung auf der Basis des Mappens.

2. Verfahren nach Anspruch 1,
   wobei der Millimeterwellen-Zugriffspunkt ausgelegt ist, einen Abdeckungsbereich ohne die Verwendung einer Strahlformung und einen erweiterten Abdeckungsbereich, wenn eine Strahlformung verwendet wird, aufzuweisen, wobei das Verfahren ferner umfasst:

   - Prüfen der gemappten Signalstärke und Bestimmen, ob sich die Benutzerausrüstung in dem erweiterten Abdeckungsbereich des Millimeterwellen-Zugriffspunkts befindet; und
- wenn sich die Benutzerausrüstung in dem erweiterten Abdeckungsbereich des Millimeterwellen-Zugriffspunkts befindet, Bestimmen von Strahlformungsgewichten, um die Benutzerausrüstung auf einem Millimeterwellen-Kanal zu bedienen.

**3.** Verfahren nach Anspruch 1 oder 2,
wobei der Schritt der Bestimmung von Strahlformungsgewichten, um die Benutzerausrüstung auf einem Millimeterwellen-Kanal zu bedienen, umfasst: Scannen mindestens einiger der verfügbaren schmalen Strahle mit maximaler Verstärkung des Millimeterwellen-Zugriffspunkts.

**4.** Verfahren nach Anspruch 2 oder 3,
wobei der Schritt der Bestimmung von Strahlformungsgewichten, um die Benutzerausrüstung auf einem Millimeterwellen-Kanal zu bedienen, wenn sich die Benutzerausrüstung in dem erweiterten Abdeckungsbereich des Millimeterwellen-Zugriffspunkts befindet, nur für bestimmte Benutzerausrüstungen auf der Basis mindestens der Dienstklasse der Benutzerausrüstung oder der Trägerinformationen der Benutzerausrüstung durchgeführt wird.

**5.** Verfahren nach einem der Ansprüche 2 bis 4,
wobei der Schritt der Bestimmung von Strahlformungsgewichten, um die Benutzerausrüstung auf einem Millimeterwellen-Kanal zu bedienen, wenn sich die Benutzerausrüstung in dem erweiterten Abdeckungsbereich des Millimeterwellen-Zugriffspunkts befindet, nur für bestimmte Benutzerausrüstungen auf der Basis mindestens ihrer Geschwindigkeit durchgeführt wird.

**6.** Millimeterwellen-Zugriffspunkt, welcher geeignet ist, ein Verfahren nach einem der Ansprüche 1 bis 5 vorzunehmen.

**Revendications**

**1.** Procédé d'établissement d'une connexion par ondes millimétriques entre un point d'accès d'ondes millimétriques (5) et un équipement utilisateur (6) dans un réseau de communication sans fil, le réseau comprenant en outre une station de base (4) servant l'équipement utilisateur, le procédé, au point d'accès d'ondes millimétriques, comprenant :

- la surveillance d'un signal de liaison montante de fréquence existante entre l'équipement utilisateur et la station de base, la fréquence existante étant inférieure à 5 GHz ;
- la mise en correspondance d'une intensité du signal de liaison montante de fréquence existante avec une intensité de signal associée dans une fréquence d'accès d'ondes millimétriques ; et
- l'établissement d'une connexion par ondes millimétriques avec l'équipement utilisateur sur la base de la mise en correspondance.

**2.** Procédé selon la revendication 1, le point d'accès d'ondes millimétriques étant configuré pour avoir une zone de couverture sans utiliser la formation de faisceau et une zone de couverture étendue si la formation de faisceau est utilisée, le procédé comprenant en outre :

- la vérification de l'intensité de signal mise en correspondance et la détermination que l'équipement utilisateur se trouve ou non dans la zone de couverture étendue du point d'accès d'ondes millimétriques ; et
- si l'équipement utilisateur se trouve dans la zone de couverture étendue du point d'accès d'ondes millimétriques, la détermination de poids de formation de faisceau pour servir l'équipement utilisateur sur un canal d'ondes millimétriques.

**3.** Procédé selon la revendication 1 ou 2, dans lequel l'étape de détermination de poids de formation de faisceau pour servir l'équipement utilisateur sur un canal d'ondes millimétriques comprend le balayage d'au moins certains des faisceaux étroits de gain maximal disponibles du point d'accès d'ondes millimétriques.

**4.** Procédé selon la revendication 2 ou 3, dans lequel l'étape de détermination de poids de formation de faisceau pour servir l'équipement utilisateur sur un canal d'ondes millimétriques si l'équipement utilisateur se trouve dans la zone de couverture étendue du point d'accès d'ondes millimétriques est uniquement effectuée pour certains équipements utilisateurs au moins sur la base de la classe de service de l'équipement utilisateur ou d'informations de support de l'équipement utilisateur.

**5.** Procédé selon une des revendications 2 à 4, dans lequel l'étape de détermination de poids de formation de faisceau pour servir l'équipement utilisateur sur un canal d'ondes millimétriques si l'équipement utilisateur se trouve dans la zone de couverture étendue du point d'accès d'ondes millimétriques est uniquement effectuée pour certains équipements utilisateurs au moins sur la base de leur vitesse.

**6.** Point d'accès d'ondes millimétriques adapté pour effectuer un procédé selon l'une quelconque des revendications 1 à 5.

**Fig. 1**

**Fig. 2**

# Fig. 3

# Fig. 4

# Fig. 5

UE

mmW - AP

eNB

50

40

41-43

51

52

53

# Fig. 6

# Fig. 7

**REFERENCES CITED IN THE DESCRIPTION**

**Patent documents cited in the description**

- US 20120099448 A
- US 20140235287 A
- US 20130286960 A
- US 20140148107 A